# EUROPEAN PATENT SPECIFICATION

(11) **EP 2 236 351 B1**
(45) Date of publication and mention of the grant of the patent: **21.12.2011**
(21) Application number: 10158745.9
(22) Date of filing: 31.03.2010
(51) Int. Cl.: B60N 2/28

(54) **Harness fastener system for an infant carrier apparatus and method of operating the same**
Scharnierbefestigungssystem für eine Kindertragevorrichtung und Betriebsverfahren dafür
Système fixateur de harnais pour appareil porteur de nourrissons et son procédé de fonctionnement

(30) Priority: 31.03.2009 CN 200910132911
(43) Date of publication of application: 06.10.2010
(73) Proprietor: Wonderland Nurserygoods Hong Kong Company Limited, Central Hong Kong (CN)
(72) Inventor: Guo, Zheng-Wen, 114 Taipei (TW)
(74) Representative: Epping - Hermann - Fischer

(56) References cited:
- EP-A2- 1 880 892
- DE-U1-202009 010 180
- US-A1- 2004 003 486
- US-A1- 2006 108 845

## Description

This application claims priority of China patent application no. 200910132911.9, filed on March 31, 2009.

### BACKGROUND OF THE INVENTION

### Field of the Invention

The present invention relates to a harness fastener system for an infant carrier apparatus and a method of operating the same.

### Description of the Related Art

The restrain harness, as see US-A-2004/0003486 used in a vehicle usually includes a fastener system needed for securely joining one or more straps of the harness. For example, after a user is seated, the end of shoulder straps and/or lap straps can be joined together via a buckle to fasten the harness. In use, the fastened harness can restrain the position of the user and cushion abrupt movements induced by sudden stop of the vehicle.

Requirements for the fastener system include the ability to fasten and unfasten in a quick and convenient manner and resistance to shock. However, for infant carrier apparatuses, the safety requirements for the harness fastener system are even more restrictive in terms of reliability and use safety, which may not be met by all current designs.

Therefore, there is a need for an improved harness fastener system that can address at least the foregoing issues.

### SUMMARY

The present application describes a harness fastener system and a method of operating the same that can fasten and unfasten in a convenient manner and prevent erroneous insertion of plug elements into a buckle of the harness fastener system.

In one embodiment, the harness fastener system comprises a plug assembly, and a buckle including a detent movable to fasten with the plug assembly, characterized in that the buckle comprises a detent latch operable to engage with the detent for restraining the detent to an unlatched position, and the detent latch is pushed by the plug assembly when the plug assembly is inserted into the buckle, whereby the detent is disengaged from the detent latch and moves to fasten with the plug assembly.

In another embodiment, the method of operating the harness fastener system comprises assembling a first plug with a second plug, wherein the first plug has a first engaging portion and the second plug has a second engaging portion, the first engaging portion being adapted to restrainedly accommodate the second engaging portion for forming the plug assembly. The plug assembly is then placed in a position facing the buckle, and the first and second engaging portions coupled with each other are inserted into the buckle to cause the second engaging portion to push the detent latch out of restraining engagement with the detent, whereby the detent moves to engage with the first engaging portion.

At least one advantage of the harness fastener system is the ability to prevent erroneous insertion of plug elements into the buckle. Accordingly, the reliability and safety of the harness can be improved.

### BRIEF DESCRIPTION OF THE DRAWINGS

FIG. 1 is a front view illustrating an embodiment of a harness fastener system for an infant carrier apparatus;

FIG. 2 is an exploded view of the harness fastener system;

FIGs. 3 and 4 are schematic views illustrating one embodiment of a plug assembly used in the fastener system;

FIGs. 5 through 11 are schematic views illustrating the assembly of various component parts for forming a latch mechanism of a buckle used in the fastener system;

FIG. 12 is a cross-sectional view of the buckle taken along section line A-A' shown in FIG. 1;

FIG. 13 is a cross-sectional view of the buckle taken along section line B-B' shown in FIG. 1;

FIGs. 14 and 15 are cross-sectional views illustrating a fastening operation of the plug assembly with the buckle;

FIG. 16 is a schematic perspective view showing how the plug assembly is latched in the buckle;

FIG. 17 is a schematic view illustrating an unfastening operation of the harness fastener system;

FIGs. 18 and 19 are schematic views illustrating the insertion of the first plug into the buckle without the second plug;

FIGs. 20 and 21 are schematic views illustrating the insertion of the second plug into the buckle without the first plug;

FIG. 22 is a schematic view illustrating the plug assembly inserted into the buckle with an incorrect orientation;

FIGs. 23 through 25 are schematic views of another embodiment of the harness fastener system; and

FIG. 26 is a schematic view illustrating an embodiment of an infant carrier apparatus provided with the harness fastener system.

### DETAILED DESCRIPTION OF THE EMBODIMENTS

The present application describes a harness fastener system and a method of operating the same that can fasten and unfasten in a convenient manner and prevent erroneous insertion of plug elements into a buckle of the harness fastener system. Accordingly, the reliability and safety of the harness can be improved.

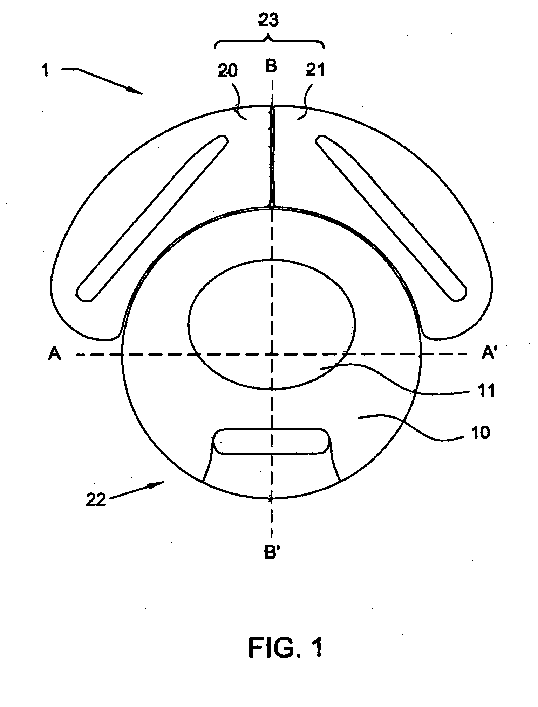

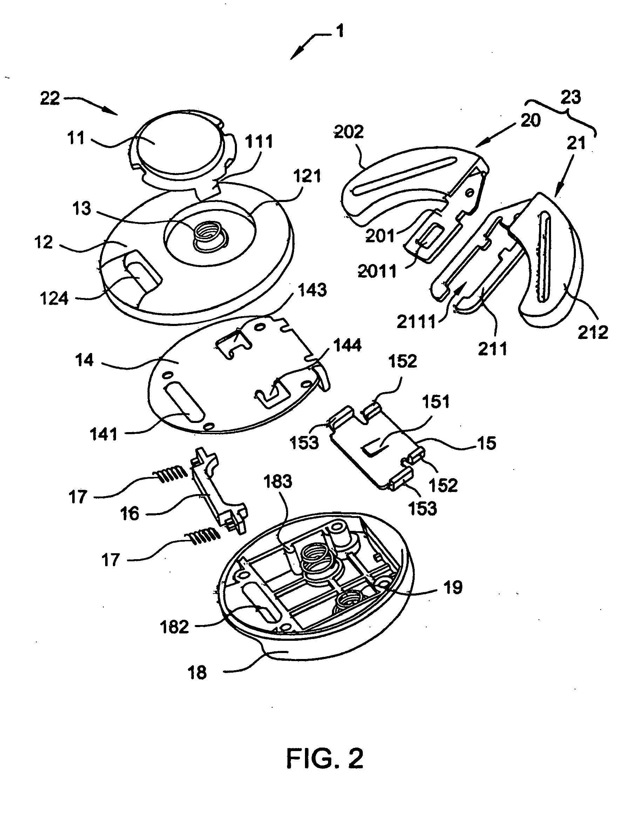

FIG. 1 is a front view illustrating an embodiment of a harness fastener system 1 suitable for use with an infant carrier apparatus, and FIG. 2 is an exploded view of the harness fastener system 1. As shown in FIGs. 1 and 2, the fastener system 1 once fastened has a generally rounded shape. The fastener system comprises a buckle 22 and a plug assembly 23 that can fasten with each other. The buckle 22 comprises a housing that is formed by the assembly of a casing 18 and a cover 12. For fastening the plug assembly 23, the buckle 22 includes a latch mechanism that includes a release button 11, a spring element 13 coupled with the release button 11, a guide plate 14, a detent 15, a detent latch 16, a spring element 17 coupled with the detent latch 16, and a spring element 19 coupled with the detent 15. In turn, the plug assembly 23 comprises a first plug 20 and a second plug 21. The first and second plugs 20 and 21 have different outer contours, including complimentary shape portions that enable to mount the first and second plugs 20 and 21 with each other for forming the plug assembly 23. When a user wants to fasten the harness fastener system 1, the first and second plug 20 and 21 first must be assembled with each other to form the plug assembly 23. Then, the plug assembly 23 can be inserted into and fastened with the buckle 22 according to a predetermined direction. When the harness fastener system 1 is to be detached, a user can press the release button 11 for triggering unfastening of the plug assembly 23 from the buckle 22. Exemplary embodiments of the plug assembly 23 and buckle 22 are described hereinafter.

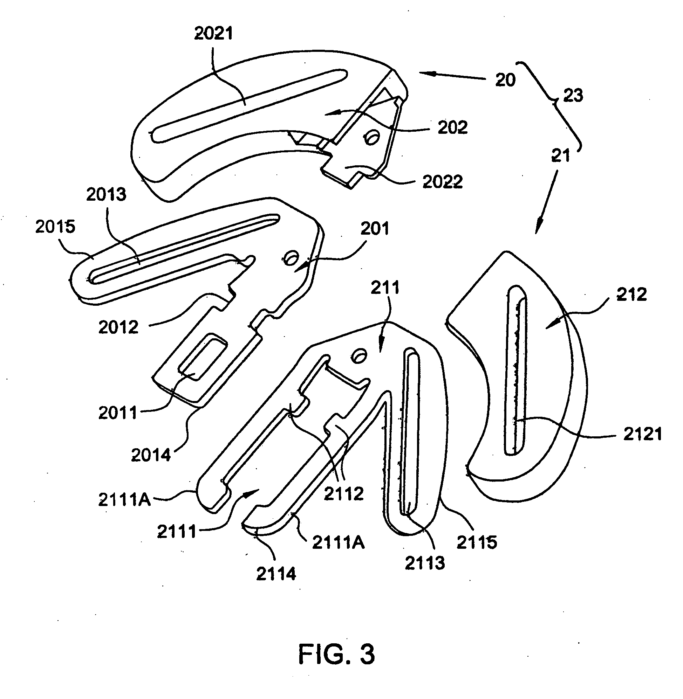

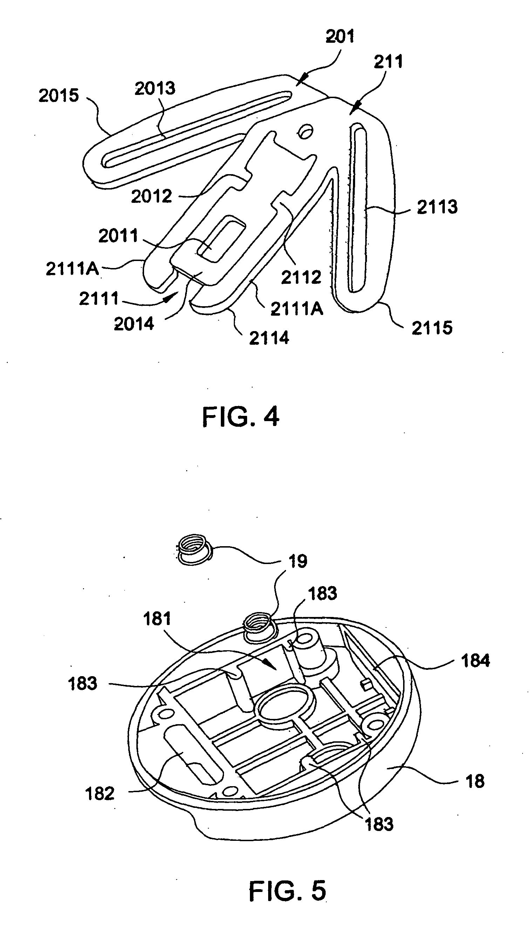

FIGs. 3 and 4 are schematic views illustrating the construction of the plug assembly 23. The first plug 20 of the plug assembly 23 can be formed by a first tongue plate 201 and a sheath 202. The first tongue plate 201 has an elongated first engaging portion 2014 adapted to insert into the buckle 22, and an ear portion 2015 adjoined at an inclined angle with the first engaging portion 2014. The first engaging portion 2014 includes a retainer hole 2011. Each of two lateral edges of the first engaging portion 2014 also respectively forms a recessed catch 2012. The ear portion 2015 includes an aperture 2013 for securing a loop end of a strap (e.g., a shoulder strap, not shown). The sheath 202 can mount with the ear portion 2015 for fixedly joining the first tongue plate 201 with the sheath 202. An aperture 2021 is also provided through the sheath 202 in alignment with the aperture 2013 of the ear portion 2015 for joining the loop end of the strap (not shown). In addition, a side portion of the sheath 202 also includes first alignment structure that is oriented toward the first tongue plate 201 for ensuring that the plug assembly 23 is correctly oriented when it is inserted into the buckle 22. According to one embodiment, the first alignment structure can include an aligning tab 2022. Once the first tongue plate 201 and the sheath 202 are fixedly joined each other, the ear portion 2015 is located inside the sheath 202, and the first engaging portion 2014 extends out of the sheath 202.

It is worth noting that the sheath 202 can be made of plastics, whereas the first tongue plate 201 can be made of steel, metallic alloys, or any rigid materials adapted to reinforce the plug assembly 23. While the foregoing embodiment forms the first plug 20 by assembling two component parts (i.e., first tongue plate 201 and sheath 202), other contemplated embodiments may also form the first plug 20 in a single body (e.g., the first plug may be formed by only the first tongue plate 201 without the sheath 202).

Similarly, the second plug 21 can also be formed by a second tongue plate 211 and a sheath 212. The second tongue plate 211 has an elongated second engaging portion 2114 adapted to couple with the firs engaging portion 2014, and an ear portion 2115 adjoined at an inclined angle with one end of the second engaging portion 2114. The second engaging portion 2114 can include a gap 2111 laterally delimited between two arms 2111A, and ribs 2112 projecting inward from two opposite side edges of the arms 2111A. The ear portion 2115 also includes an aperture 2113 for securing a loop end of another strap (e.g., a shoulder strap, not shown). The sheath 212 can mount with the ear portion 2115 for fixedly joining the second tongue plate 211 with the sheath 212. An aperture 2121 is also provided through the sheath 212 in alignment with the aperture 2113 of the ear portion 2115 for joining the loop end of the strap (not shown). Once the second tongue plate 211 and the sheath 212 are fixedly joined each other, the ear portion 2115 is located inside the sheath 212 with the apertures 2113 and 2121 aligned with each other, whereas the second engaging portion 2114 extends out of the sheath 212.

It is worth noting that the sheath 212 can also be made of plastics, whereas the second tongue plate 211 can be made of steel, metallic alloys, or any rigid materials adapted to reinforce the plug assembly 23. While the foregoing embodiment forms the second plug 21 by assembling two component parts (i.e., second tongue plate 211 and sheath 212), other contemplated embodiments may also form the second plug 21 in a single body (e.g., the second plug may be formed by only the second tongue plate 211 without the sheath 212).

As shown in FIGs. 3 and 4, the first and second plug 20 and 21 are mounted together for forming the plug assembly 23 by adjacently joining the first and second tongue plates 201 and 211. In particular, the tongue plates 201 and 211 can be formed with a bent profile having different and complementary shape portions, i.e., the arms 2111A delimiting the gap 2111 in the open structure of the tongue plate 211 have a contour complementary to the shape of the first engaging portion 2014. Accordingly, when the tongue plates 201 and 211 are joined together, the first engaging portion 2014 of the first tongue plate 201 can snugly fit into the gap 2111 of the second tongue plate 211, whereas the ribs 2112 of the second tongue plate 211 can respectively engage with the catches 2012 of the first tongue plate 201 for blocking lengthwise sliding of the first plug 20 relative to the second plug 21. The first engaging portion 2014 and the second engaging portion 2114 can then lie substantially in a same plane and extend substantially in a same direction, and insertion of the first and second plug 20 and 21 into the buckle 22 can be accomplished in unison. Because the second engaging portion 2114 is longer than the first engaging portion 2014, the second tongue plate 211 extends over a length that is greater than that of the first tongue plate 201 when the plug assembly 23 is inserted into the buckle 22. In this manner, when the plug assembly 23 is inserted into the buckle 22, the first engaging portion 2014 can act as the locking portion of the plug assembly 23 through which the plug assembly 23 can be retained in the buckle 22, whereas the second engaging portion 2114 can act as the driving portion of the plug assembly 23 for actuating the latch mechanism in the buckle 22.

It is worth noting that while the foregoing embodiment provides the ribs 2112 on the second tongue plate 211 and the complementary catches 2012 on the first tongue plate 201, the positions of these structural elements can be interchanged. Moreover, while the aligning tab 2022 of the first alignment structure is provided on the sheath 202 of the first plug 20, alternate embodiments can also place the first alignment structure on the second plug 21.

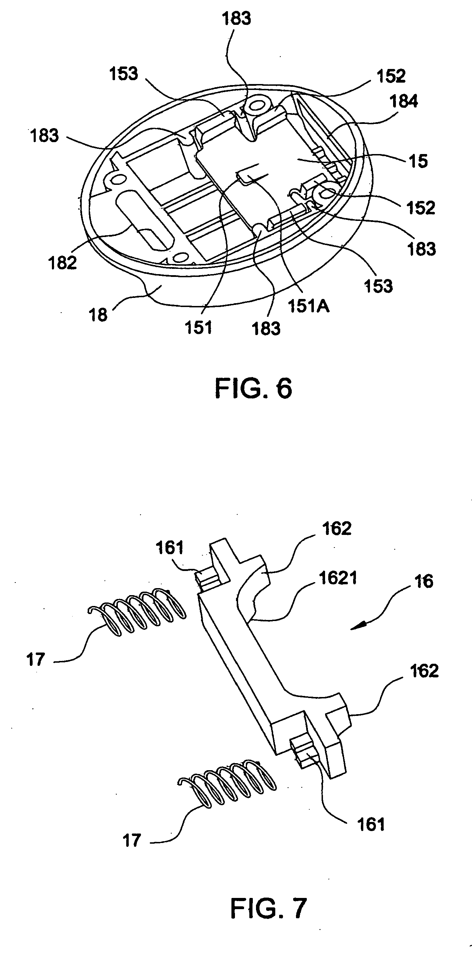

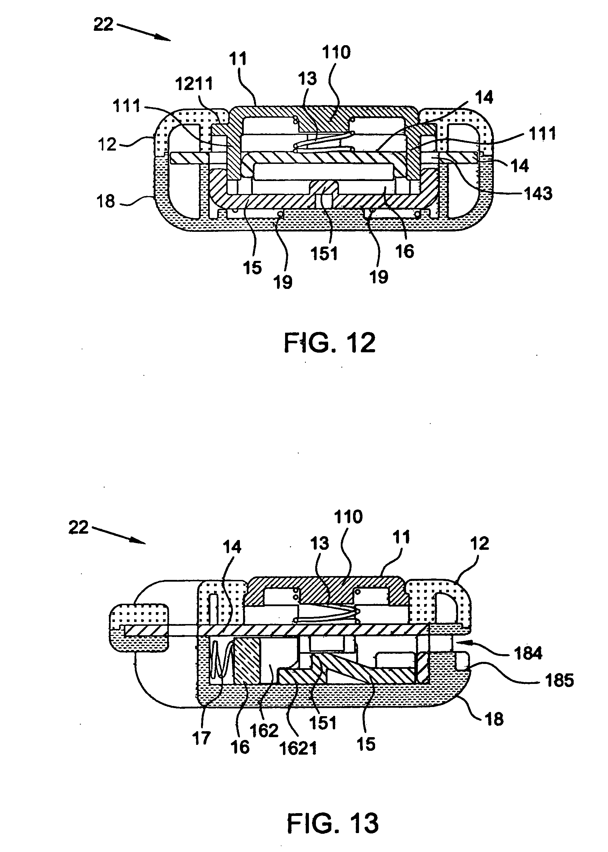

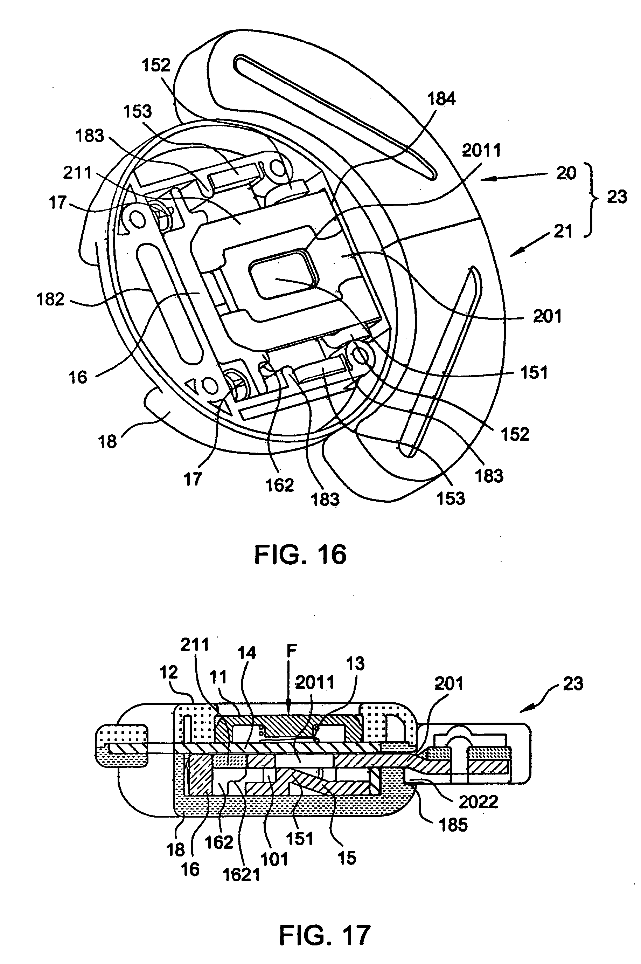

Reference is now made to FIGs. 5 through 13 to describe the latch mechanism of the buckle 22. More specifically, FIGs. 5 through 11 are schematic views illustrating the assembly of component parts that constitute the latch mechanism in the buckle 22, FIG. 12 is a cross-sectional view of the buckle 22 taken along section line A-A' of FIG. 1, and FIG. 13 is a cross-sectional view of the buckle 22 taken along section line B-B'. As shown in FIGs. 5 and 6, the casing 18 has an inner volume 181 for assembling the latch mechanism. An end portion of the casing 18 includes an opening 182 for securing a crotch strap (not shown) with the buckle 22. Two inner sidewalls of the casing 18 located on left and right sides of the opening 182 respectively include restraining ribs 183. As shown in FIG. 6, when the detent 15 is assembled in the casing 18, the restraining ribs 183 can block sliding movement of the detent 15 on the casing 18, so that the detent 15 is allowed to move only in a direction perpendicular to the casing 18. A distal end of the casing 18 opposite the opening 182 also includes an insertion slot 184 for passage of the plug assembly 23 into the buckle 22 (as shown in FIG. 16). As shown in FIG. 13, an outer side surface of the casing 18 proximate the insertion slot 184 includes a second alignment structure, which can be exemplary embodied as a recess 185. When the plug assembly 23 inserts into the buckle 22, the first alignment structure on the plug assembly 23 must be in alignment with the second alignment structure to allow the plug assembly 23 to completely insert through the buckle 22 and trigger proper fastening with the detent 15.

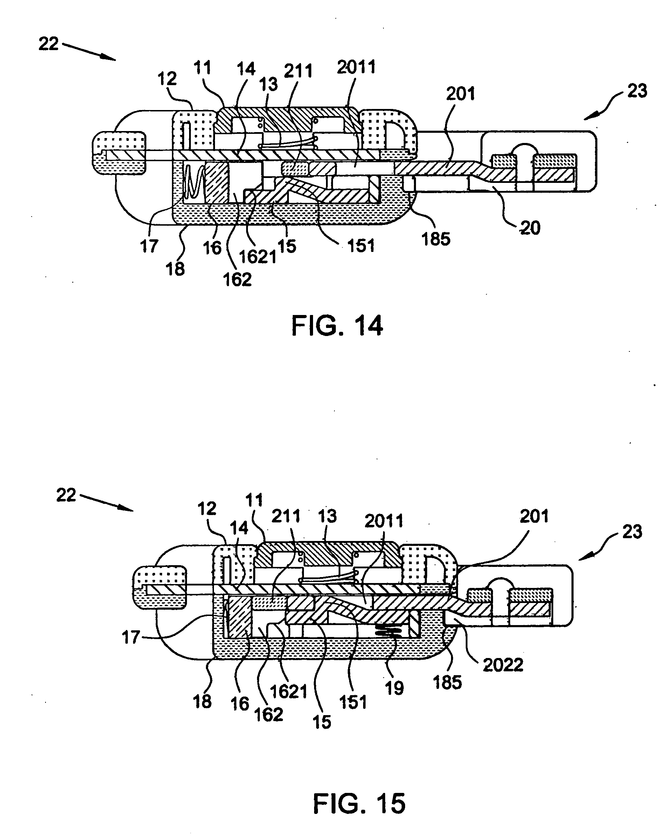

FIG. 6 is a schematic view illustrating the assembly of the detent 15. As shown, the spring elements 19 can be respectively mounted in recessed grooves of the casing 18, and the detent 15 can be mounted over the spring elements 19 such that the spring elements 19 are positioned between the detent 15 and the bottom of the casing 18. According to one embodiment, the detent 15 can exemplary have a plate shape placed in contact on the spring elements 19. A central region of the detent 15 can have a protruding stud 151 that can movably engage through the retainer hole 2011 (FIG. 3) for fastening the plug assembly 23 with the buckle 22 (as shown in FIG. 15). As shown, a side of the stud 151 facing the insertion slot 184 can have an inclined surface 151A. In addition, each of two opposite sides of the detent 15 can include a guiding sidewall 152 and restraining flange 153. The guiding sidewalls 152 can facilitate the insertion of the plug assembly 23 in a linear direction, such that the plug assembly 23 is correctly aligned relative to the detent 15. Each of the restraining flanges 153 is positioned between two restraining ribs 183 for blocking sliding movement of the detent 15 on the casing 18, such that the detent 15 is allowed to move only in a direction perpendicular to the casing 18.

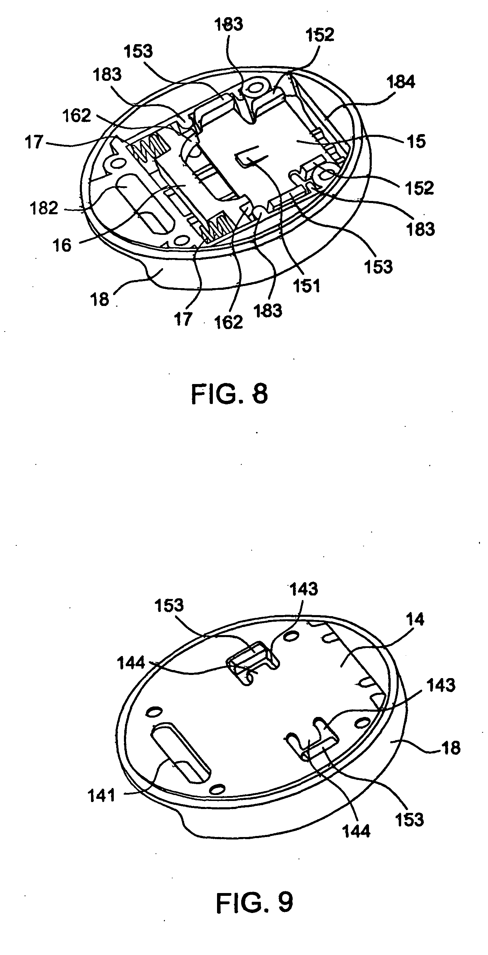

FIGs. 7 and 8 are schematic views illustrating the assembly of the detent latch 16. The detent latch 16 is movably mounted in the casing 18 at a location oppositely facing the insertion slot 184 and proximate the detent 15. Each of two lateral end portions of the detent latch 16 respectively includes a stud 161 that protrudes rearward for coupling with one spring element 17. The two spring elements 17 are mounted between the detent latch 16 and an inner sidewall of the casing 18. The detent latch 16 can be thereby biased to toward the insertion slot 184 under action of the spring elements 17 to a locking position that engages with and restrains the detent 15 close to the bottom of the casing 18. When the plug assembly 23 is inserted into the buckle 22, the distal end of the plug assembly 23 can push the detent latch 16 out of engagement with the detent 15, so that the detent 15 is permitted to move away from the bottom of the casing 18 for engaging with the retainer hole 2011 of the plug assembly 23. Abuttal lugs 162 are respectively provided on a side of the detent latch 16 facing the insertion slot 184. In addition, a portion of the detent latch 16 under each abuttal lug 162 can also include an inward recess for forming a retainer surface 1621. When the buckle 22 is assembled, the retainer surfaces 1621 of the detent latch 16 can engage with an end portion of the detent 15 so as to restrain the detent 15 to a position close to the bottom of the casing 18 (as shown in FIG. 14). Once the detent 15, the detent latch 16 and the spring elements 17 and 19 are mounted in the casing 18, the guide plate 14 can then be assembled over the casing 18.

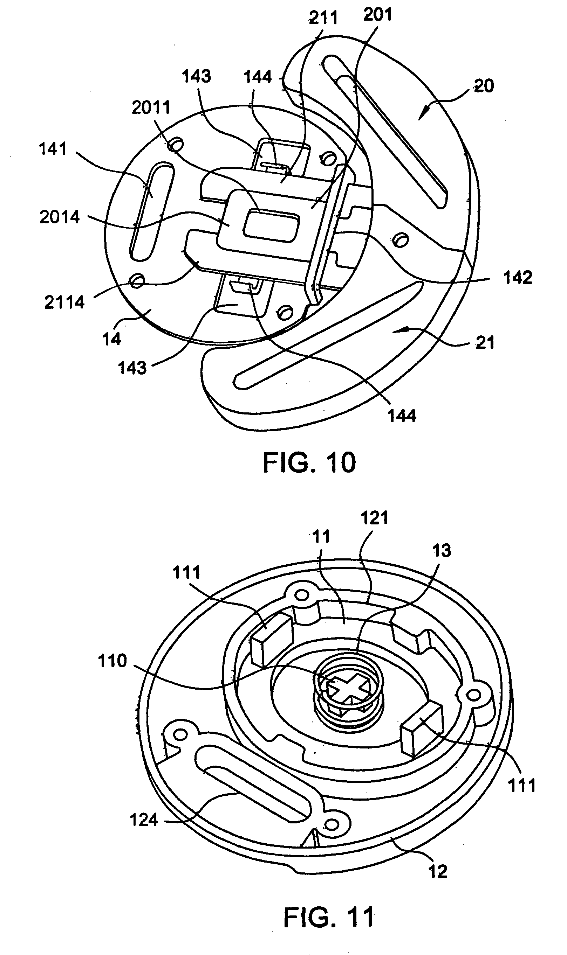

FIGs. 9 and 10 are schematic views illustrating the assembly of the guide plate 14. More specifically, FIG. 9 is a schematic view showing the guide plate 14 assembled on the casing 18, and FIG. 10 shows a side of the guide plate 14 oriented toward the casing 18. Once it is assembled on the casing 18, the guide plate 14 substantially covers the detent 15, the detent latch 16, and the spring elements 17. According to one embodiment, the guide plate 14 may be made of steel or a rigid metal alloy. The guide plate 14 includes an opening 141 in alignment with the opening 182 of the casing 18 for securing the crotch strap. A distal end of the guide plate 14 opposite the side of the opening 141 also forms an elongated slot 142 in alignment with the insertion slot 184 of the casing 18 for permitting insertion of the plug assembly 23 into the buckle 22. In one embodiment, the elongated slot 142 can be formed through an end portion of the guide plate 14 bent toward the casing 18. In addition, the guide plate 14 can have two lateral ribs 144 bent toward the casing 18 at positions approximately corresponding to the restraining flanges 153 for defining the insertion path of the plug assembly 23 through the interior of the buckle 22. As shown in FIG. 10, when the plug assembly 23 inserts into the buckle 22, the first and second tongue plates 201 and 211 can slide through the gap between the lateral ribs 144, which can prevent deviation of the plug assembly 23 during insertion. Moreover, the guide plate 14 also comprises openings 143 for passing a portion of the release button 11 through the guide plate 14. The openings 143 respectively correspond to the positions of the lateral ribs 144 and expose the underlying detent 15.

FIG. 11 is a schematic view showing an inner side of the release button 11 and cover 12 that is oriented toward the interior of the buckle 22. As shown in FIGs. 11 and 12, the release button 11 is mounted in a sliding manner through the opening 121 of the cover 12. An inner surface of the release button 11 includes a stud 110 that can be coupled with the spring element 13. The inner surface of the release button 11 also includes two push fingers 111 protruding inward. Once assembled, the push fingers 111 of the release button 11 respectively pass through the openings 143 of the guide plate 14. The cover 12 can be fixedly secured with the casing 18 via fastener elements such as screws, with the crotch strap opening 124 of the cover 12 aligned with the opening 141 of the guide plate 14 and opening 182 of the casing 18. In addition, the release button 11 can be exposed through the opening 121 of the cover 12, and a sidewall of the opening 121 can form a retainer shoulder 1211 adapted to abut against an outer edge of the release button 11 for preventing separation of the release button 11 from the buckle 22.

FIGs. 12 and 13 are cross-sectional views illustrating the buckle 22 without insertion of plug assembly 23. When the plug assembly 23 is not inserted in the buckle 22, the spring element 17 can bias the detent latch 16 toward the detent 15 such that the retainer surfaces 1621 of the detent latch 16 can engage with the detent 15. Accordingly, the detent 15 can be kept at a position adjacent to the bottom of the casing 18. When a user wants to insert the plug assembly 23 into the buckle 22, the first and second plugs 20 and 21 first have to be coupled with each other to form the plug assembly 23. Then, the formed plug assembly 23 can be inserted and fastened with the buckle 22. The harness fastener system 1 cannot work functionally if either of the first plug 20 or second plug 21 is individually inserted into the buckle 22, or if the plug assembly 23 is inserted into the buckle 22 with incorrect orientation.

FIGs. 14 through 16 are schematic views illustrating a fastening operation of the plug assembly 23 with the buckle 22. More specifically, FIGs. 14 and 15 are cross-sectional views illustrating the fastening operation of the plug assembly 23 with the buckle 22, and FIG. 16 is a schematic perspective view showing how the plug assembly 23 is latched in the buckle 22 (representation of the guide plate 14, cover 12, spring element 13 and release button 11 is omitted in FIG. 16 to more clearly show the latched state of the buckle 22). When a user wants to attach the harness fastener system 1, the first and second plugs 20 and 21 first have to be coupled with each other (as shown in FIG. 4) to form the plug assembly 23. The plug assembly 23 can then be oriented such that the first alignment structure of the plug assembly 23 is in alignment with the second alignment structure of the buckle 22 (i.e., the aligning tab 2022 faces the recess 185), and then inserted through the insertion slot 184 into the buckle 22. As the plug assembly 23 slides through the buckle 22, the aligning tab 2022 of the first alignment structure can moves along the recess 185, and the distal end of the second tongue plate 211 can push against the detent latch 16 (the contact region between the second tongue plate 211 and the detent latch 16 is located between the abuttal lugs 162 of the detent latch 16). As a result, the detent latch 16 can move in a first direction to compress the spring elements 17. As the detent latch 16 moves in the first direction, the retainer surfaces 1621 of the detent latch 16 initially in contact with the detent 15 can disengage from the detent 15, which removes the restraining contact exerted by the detent latch 16 on the detent 15, as shown in FIG. 16.

As the plug assembly 23 continues to move inward, the retainer hole 2011 of the first tongue plate 201 comes in alignment with the stud 151 of the detent 15, and the spring element 19 can push the detent 15 to move in a second direction (i.e., perpendicular to the first direction) away from the bottom of the casing 18 and toward the first tongue plate 201. Accordingly, the stud 151 of the detent 15 can engage with the retainer hole 2011 of the first tongue plate 201. The first plug 20 thereby locked cannot separate from the buckle 22. Because the first and second tongue plates 201 and 211 are restrainedly coupled with each other (i.e., by engagement of the ribs 2112 with the catches 2012), withdrawal of the second plug 21 is also blocked. In this manner, the plug assembly 23 can be effectively fastened with the buckle 22. In this fastened state, the front end portion of the detent 15 can lie adjacent in abuttal contact with the abuttal lugs 162.

As shown in FIG. 17, a user can unfasten the harness fastener system 1 by applying a force F on the release button 11. As a result, the push fingers 111 of the release button 11 (as shown in FIG. 12) can push against the detent 15 and cause the detent 15 to move in direction away from the plug assembly 23 and compress the spring element 19. The stud 151 of the detent 15 can thereby disengage from the retainer hole 2011 of the first tongue plate 201, and the front end portion of the detent 15 can leave out of abutment against the abuttal lugs 162. Under action of the spring elements 17, the detent latch 16 can then move toward the detent 15, and the retainer surfaces 1621 of the detent latch 16 can recover its initial position engaging with the front end portion of the detent 15 for restraining the detent 15 to the unlocked position. As the detent latch 16 moves toward the detent 15, the detent latch 16 can also push the plug assembly 23 out of the buckle 22. Ejection of the unfastened plug assembly 23 can be thereby facilitated.

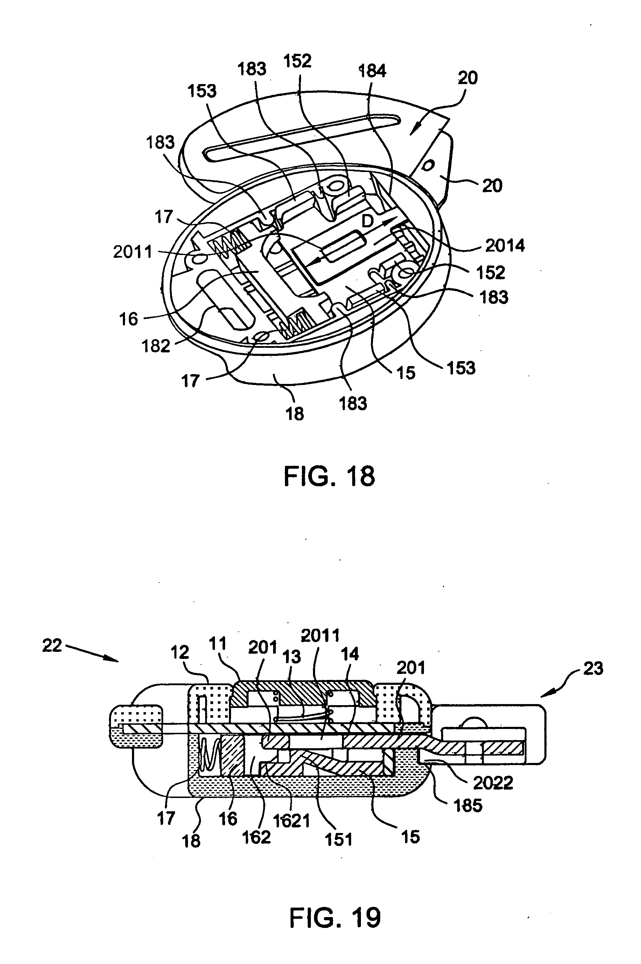

FiGs. 18 and 19 are schematic views illustrating the insertion of the first plug 20 into the buckle 22 without the second plug 21. For more clearly showing the configuration of the first plug 20 in the buckle 22, the representation of certain elements (e.g., the guide plate 14, cover 12, spring element 13 and release button 11) is omitted in FIG. 18. As shown, when the first plug 20 is solely inserted into the buckle 22, the maximum course of the first plug 20 cannot reach the detent latch 16 owing to a relatively shorter length D of the first engaging portion 2014. Consequently, the distal end of the first tongue plate 201 cannot push the detent latch 16 out of its restraining engagement with the detent 15, and the detent 15 is kept in its initial position away from the first tongue plate 201. The first plug 20 thus cannot solely fasten with the buckle 22.

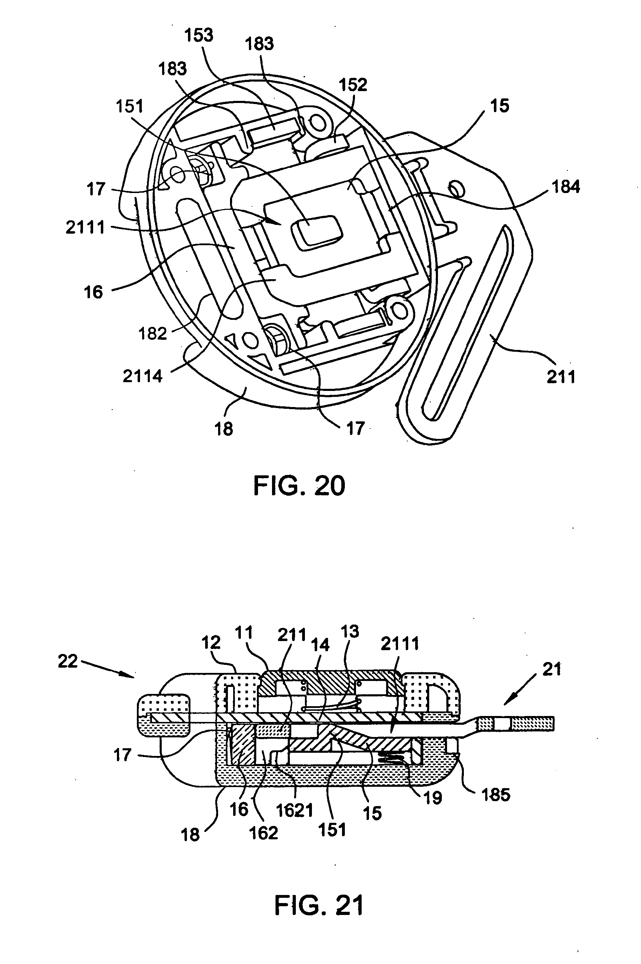

FIGs. 20 and 21 are schematic views illustrating the insertion of the second plug 21 into the buckle 22 without the first plug 20. For more clearly showing the configuration of the second plug 21 in the buckle 22, the representation of certain elements (e.g., the guide plate 14, cover 12, spring element 13 and release button 11) is omitted in FIG. 20. As shown, when the second plug 21 is solely inserted into the buckle 22, the distal end of the second tongue plate 211 can push the detent latch 16 out of its restraining engagement with the detent 15, allowing the unlatched detent 15 to move in the second direction through the gap 2111 of the second tongue plate 211 under action of the spring elements 19. However, because the second tongue plate 211 has no structure that can engage with the stud 151 of the detent 15 and the gap 2111 is open on the distal end of the arms 2111A, the second tongue plate 211 cannot effectively fasten with the detent 15 in the extended position. In other words, a user can still withdraw the second plug 21 from the buckle 22, as the stud 151 of the detent 15 can exit out of the gap 2111 through the distal end of the arms 2111A.

It is worth noting that while the detent 15 is lying unrestrained in an extended position under action of the spring elements 19 (e.g., following insertion of the second plug 21 alone as described above), the plug assembly 23, if correctly formed and inserted again in the buckle 22, can still correctly fasten. As the correctly formed plug assembly 23 travels through the buckle 22, the plug assembly 23 can push against the inclined surface 151A of the stud 151 and cause the detent 15 to move toward the bottom of the casing 18 until the retainer hole 2011 is aligned with the position of the stud 151. Under action of the spring elements 19, the stud 151 of the detent 15 can then engage with the retainer hole 2011 for securely locking the plug assembly 23.

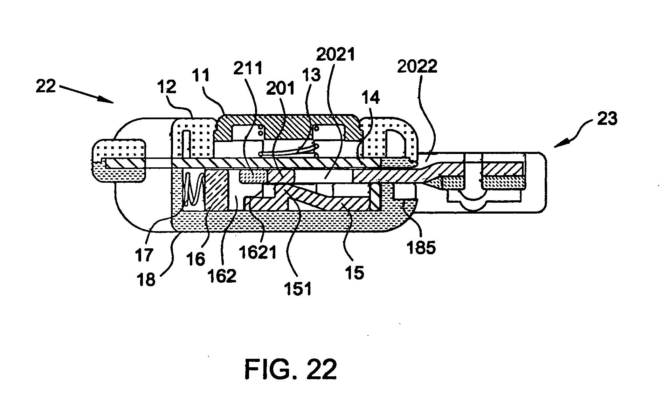

FIG. 22 is a schematic view illustrating the plug assembly 23 inserted into the buckle 22 with an incorrect orientation. If the plug assembly 23 is inserted into the buckle 22 without proper alignment between the first alignment structure of the plug assembly 23 and the second alignment structure of the buckle 22 (i.e., the aligning tab 2022 on the plug assembly 23 is not facing the recess 185 on the buckle 22), the plug assembly 23 will be arrested against a stop element of the buckle 22 before it entirely inserts into the buckle 22 (e.g., the aligning tab 2022 may abut against an outer surface of the cover 12). As a result, the plug assembly 23 cannot reach and push the detent latch 16 out of engagement with the detent 15. The detent 15 is thus restrained to engage with the retainer hole 2011 for fastening the plug assembly 23 with the buckle 22. With the design of the first and second alignment structures, effective attachment of the plug assembly 23 with the buckle 22 can be achieved only if the plug assembly 23 is inserted into the buckle 22 with a proper orientation. This additional safety measure can prevent uses of the fastener system 1 in undesired configurations.

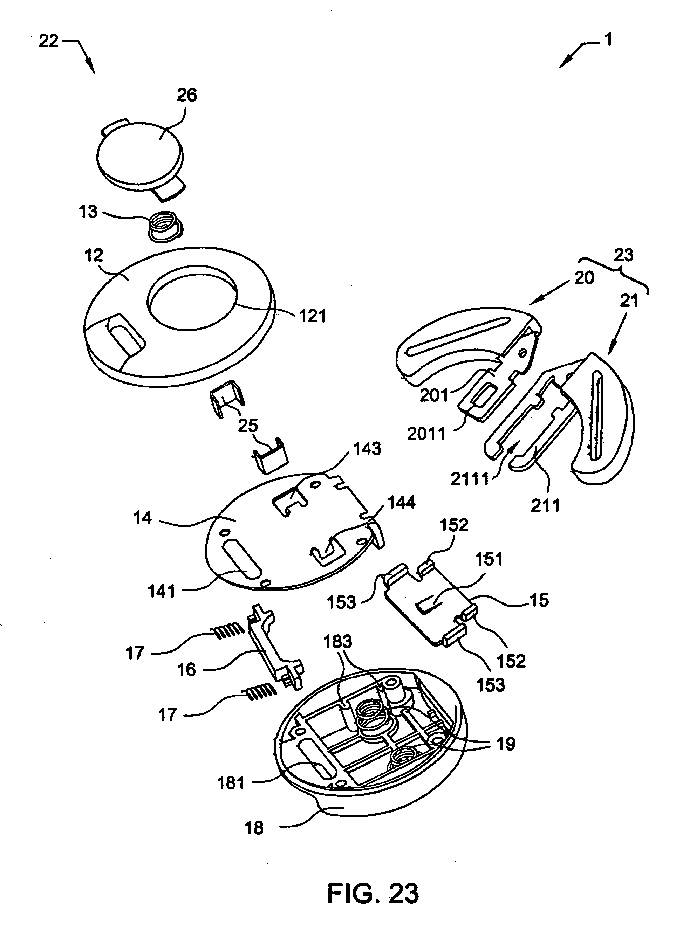

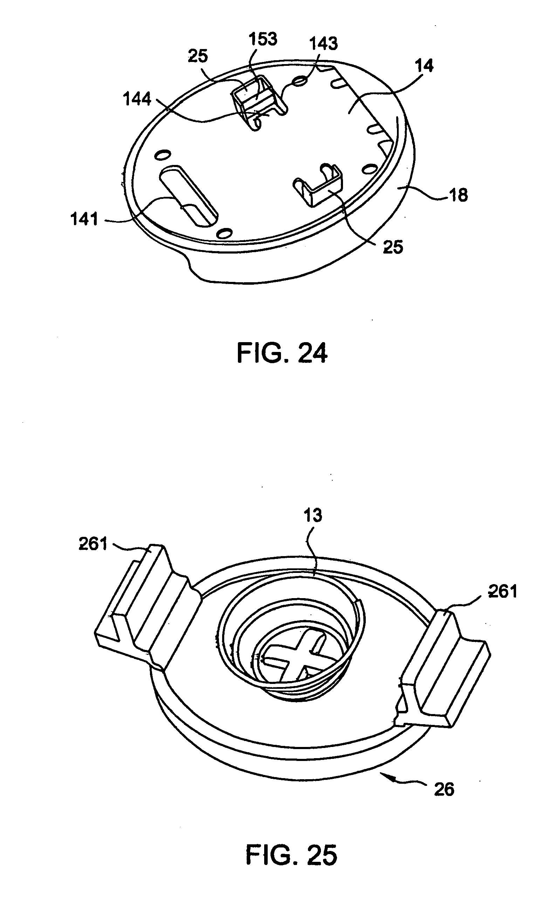

While the foregoing illustrates one exemplary embodiment of the fastener system 1, many variations are possible. FIGs. 23 through 25 are schematic views of another embodiment of the harness fastener system 1. One difference between the embodiment shown in FIGs. 23 through 25 and the previously described embodiment lies in the design and assembly of the release button 26. As shown in FIGs. 23 through 25, this variant embodiment can include a guide track 25 that is respectively mounted through each opening 143 of the guide plate 14. Each guide track 25 can facilitate the movement of the push fingers 261 of the release button 26. The release button 26 thus can be displaced in a more balanced manner for pushing the disengagement of the detent 15.

With the aforementioned construction and operating method, erroneous operation of the fastener system can be prevented. Accordingly, the reliability and safety of the fastener system can be improved.

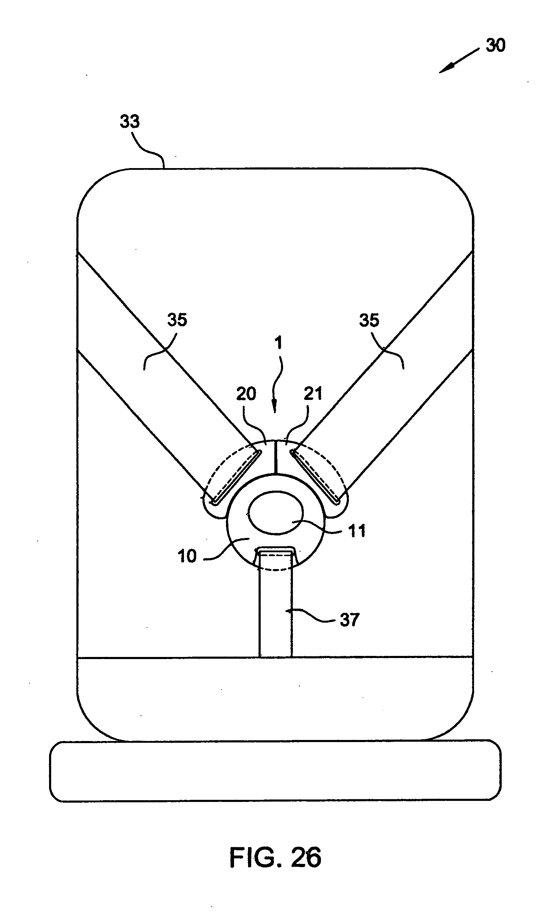

The harness fastener system described herein can be used on any types of infant carrier apparatuses, such as a child seats, strollers, and the like. FIG. 26 is a schematic view illustrating an embodiment of an infant carrier apparatus 30 provided with the harness fastener system 1. The infant carrier apparatus 30 can exemplary be a stroller including a support body 33, two shoulder straps 35 and a crotch strap 37. The ends of the shoulder straps 35 can be respectively joined with the first and second plugs of the fastener system 1, whereas the crotch strap 37 can be joined with the buckle of the fastener system. Once a child is seated in the support body 33, the shoulder straps 35 can be securely joined with the crotch strap 37 via the fastener system 1.

Realizations in accordance with the present invention therefore have been described only in the context of particular embodiments.

## Claims

1. A harness fastener system comprising a plug assembly (23), and a buckle (22) including a detent (15) movable to fasten with the plug assembly (23), **characterized in that**:
the buckle (22) comprises a detent latch (16) operable to engage with the detent (15) for restraining the detent to an unlatched position, and
the detent latch (16) is pushed by the plug assembly (23) when the plug assembly (23) is inserted into the buckle (22), whereby the detent (15) is disengaged from the detent latch (16) and moves to fasten with the plug assembly (23).

2. The harness fastener system according to claim 1, wherein the detent (15) and the detent latch (16) move along perpendicular directions.

3. The harness fastener system according to claim 1, wherein the detent latch (16) is biased to engage with the detent (15) via a first spring element (17).

4. The harness fastener system according to claim 3, wherein the detent (15) moves to fasten with the plug assembly (23) under action of a second spring element (19).

5. The harness fastener system according to claim 4, wherein the buckle (22) further comprises a release button (11) operable to push against the detent (15), whereby the detent (15) unfastens from the plug assembly (23).

6. The harness fastener system according to claim 5, wherein the detent latch (16) is movable under action of the first spring element (17) to reengage with the detent (15) for restraining the detent (15) to the unlatched position after the detent (15) unfastens from the plug assembly (23).

7. The harness fastener system according to claim 1, wherein the plug assembly (23) comprises a first plug (20) and a second plug (21) coupled with each other, the first plug (20) having a first engaging portion (2014), the second plug (21) having a second engaging portion (2114) adapted to restrainedly accommodate the first engaging portion (2014).

8. The harness fastener system according to claim 7, wherein when the plug assembly (23) is inserted into the buckle (22), the detent (15) engages with the first engaging portion (2014) of the first plug (20), and the second engaging portion (2114) pushes against the detent latch (16) owing to the second engaging portion (2114) being greater than the first engaging portion (2014) in length, whereby the detent (15) is disengaged from the restraining action of the detent latch (16).

9. The harness fastener system according to claim 7, wherein when only the second plug (21) is inserted into the buckle (22), the second engaging portion (2114) pushes the detent latch (16) out of engagement with the detent (15), whereby the detent (15) moves toward the second engaging portion (2114) without engaging therewith.

10. The harness fastener system according to claim 7, wherein the first plug (20) and the second plug (21) has different outer contours, including complementary shape portions.

11. The harness fastener system according to claim 1, wherein the plug assembly (23) and the buckle (22) respectively include a first and second alignment structure (2022, 185), when the plug assembly (23) is inserted into the buckle (22) without alignment between the first and second alignment structure (2022, 185), the plug assembly (23) is blocked from pushing against the detent latch (16) such that the detent latch (16) is kept in engagement with the detent (15) for restraining the detent (15) to the unlatched position.

12. A method of operating a harness fastener system, wherein the harness fastener system comprises a plug assembly (23) and a buckle (22), the buckle (22) includes a detent (15) and a detent latch (16) operable to engage with the detent (15) for restraining the detent (15) to an unlatched position, the method comprising:
assembling a first plug (20) with a second plug (21), wherein the first plug (20) has a first engaging portion (2014) and the second plug (21) has a second engaging portion (2114), the first engaging portion (2014) being adapted to restrainedly accommodate the second engaging portion (2114) for forming the plug assembly (23);
placing the plug assembly (23) in a position facing the buckle (22); and
inserting the first and second engaging portions (2014, 2114) coupled with each other into the buckle (22) to cause the second engaging portion (2114) to push the detent latch (16) out of restraining engagement with the detent (15), whereby the detent (15) moves to engage with the first engaging portion (2014).

13. The method according to claim 12, wherein the step of placing the plug assembly (23) in a position facing the buckle (22) comprises:
aligning a first alignment structure (2022) on the plug assembly (23) with a second alignment structure (185) on the buckle (22).

14. The method according to claim 12, wherein when only the second plug (21) is inserted into the buckle (22), the second engaging portion (2114) pushes the detent latch (16) out of engagement with the detent (15), whereby the detent (15) moves toward the second engaging portion (2114) without engaging therewith.

15. The method according to claim 12, wherein when only the first plug (20) is inserted into the buckle (22), the detent latch (16) is out of reach of a maximum course of the first plug (20), whereby the detent latch (16) is kept in engagement with the detent (15) for restraining the detent (15) to the unlatched position.

## Patentansprüche

1. Gurt-Festmachsystem, umfassend eine Steckbaugruppe (23) und ein Schloss (22), das ein Raststück (15) enthält, das beweglich ist, um an der Steckbaugruppe (23) festzumachen, **dadurch gekennzeichnet, dass**:
das Schloss (22) einen Rastriegel (16) umfasst, der bedienbar ist, sich mit dem Raststück (15) zu koppeln, um das Raststück in einer unverriegelten Stellung festzuhalten, und
der Rastriegel (16) mittels der Steckbaugruppe (23) geschoben wird, wenn die Steckbaugruppe (23) in das Schloss (22) gesteckt wird, wodurch das Raststück (15) von dem Rastriegel (16) gelöst wird und sich bewegt, um an der Steckbaugruppe (23) festzumachen.

2. Gurt-Festmachsystem gemäß Anspruch 1, wobei sich das Raststück (15) und der Rastriegel (16) entlang senkrechten Richtungen bewegen.

3. Gurt-Festmachsystem gemäß Anspruch 1, wobei der Rastriegel (16) über ein erstes Federelement (17) vorgespannt ist, um sich mit dem Raststück (15) zu koppeln.

4. Gurt-Festmachsystem gemäß Anspruch 3, wobei sich das Raststück (15) unter der Wirkung eines zweiten Federelements (19) bewegt, um an der Steckbaugruppe (23) festzumachen.

5. Gurt-Festmachsystem gemäß Anspruch 4, wobei das Schloss (22) weiter einen Löseknopf (11) umfasst, der so bedienbar ist, dass er gegen das Raststück (15) stößt, wodurch sich das Raststück (15) von der Steckbaugruppe (23) löst.

6. Gurt-Festmachsystem gemäß Anspruch 5, wobei der Rastriegel (16) unter der Wirkung des ersten Federelements (17) beweglich ist, sich wieder mit dem Raststück (15) zu koppeln, um das Raststück (15) in der unverriegelten Stellung festzuhalten, nachdem sich das Raststück (15) von der Steckbaugruppe (23) gelöst hat.

7. Gurt-Festmachsystem gemäß Anspruch 1, wobei die Steckbaugruppe (23) einen ersten Stecker (20) und einen zweiten Stecker (21) umfasst, die miteinander gekoppelt sind, wobei der erste Stecker (20) einen ersten Koppelteil (2014) aufweist und der zweite Stecker (21) einen zweiten Koppelteil (2114) aufweist, der geeignet ist, den ersten Koppelteil (2014) festhaltend aufzunehmen.

8. Gurt-Festmachsystem gemäß Anspruch 7, wobei, wenn die Steckbaugruppe (23) in das Schloss (22) gesteckt wird, sich das Raststück (15) mit dem ersten Koppelteil (2014) des ersten Steckers (20) koppelt und der zweite Koppelteil (2114) gegen den Rastriegel (16) drückt, weil der zweite Koppelteil (2114) in der Länge größer als der erste Koppelteil (2014) ist, wodurch das Raststück (15) aus der festhaltenden Wirkung des Rastriegels (16) gelöst wird.

9. Gurt-Festmachsystem gemäß Anspruch 7, wobei, wenn nur der zweite Stecker (21) in das Schloss (22) gesteckt wird, der zweite Koppelteil (2114) den Rastriegel (16) aus der Kopplung mit dem Raststück (15) schiebt, wodurch sich das Raststück (15) zum zweiten Koppelteil (2114) hin bewegt, ohne sich damit zu koppeln.

10. Gurt-Festmachsystem gemäß Anspruch 7, wobei der erste Stecker (20) und der zweite Stecker (21) unterschiedliche Außenkonturen aufweisen, die komplementäre Formbereiche enthalten.

11. Gurt-Festmachsystem gemäß Anspruch 1, wobei die Steckbaugruppe (23) bzw. das Schloss (22) eine erste und eine zweite Ausrichtstruktur (2022, 185) enthalten, und wenn die Steckbaugruppe (23) ohne Ausrichtung zwischen der ersten und der zweiten Ausrichtstruktur (2022, 185) in das Schloss (22) gesteckt wird, die Steckbaugruppe (23) blockiert wird, gegen den Rastriegel (16) zu stoßen, sodass der Rastriegel (16) in Kopplung mit dem Raststück (15) gehalten wird, um das Raststück (15) in der unverriegelten Stellung festzuhalten.

12. Verfahren zum Bedienen eines Gurt-Festmachsystems, wobei das Gurt-Festmachsystem eine Steckbaugruppe (23) und ein Schloss (22) umfasst und das Schloss (22) ein Raststück (15) und einen Rastriegel (16) umfasst, der bedienbar ist, sich mit dem Raststück (15) zu koppeln, um das Raststück (15) in einer unverriegelten Stellung festzuhalten, wobei das Verfahren umfasst:
Zusammensetzen eines ersten Steckers (20) mit einem zweiten Stecker (21), wobei der erste Stecker (20) einen ersten Koppelteil (2014) aufweist und der zweite Stecker (21) einen zweiten Koppelteil (2114) aufweist und der erste Koppelteil (2014) geeignet ist, den zweiten Koppelteil (2114) festhaltend aufzunehmen, um die Steckbaugruppe (23) zu bilden;
Bringen der Steckbaugruppe (23) in eine zum Schloss (22) weisende Stellung; und
Stecken des ersten und des zweiten Koppelteils (2014, 2114), miteinander gekoppelt, in das Schloss (22), um zu bewirken, dass der zweite Koppelteil (2114) den Rastriegel (16) aus der festhaltenden Kopplung mit dem Raststück (15) schiebt, wodurch sich das Raststück (15) bewegt, um sich mit dem ersten Koppelteil (2014) zu koppeln.

13. Verfahren gemäß Anspruch 12, wobei der Schritt des Bringens der Steckbaugruppe (23) in eine zum Schloss (22) weisende Stellung umfasst:
Ausrichten einer ersten Ausrichtstruktur (2022) an der Steckbaugruppe (23) zu einer zweiten Ausrichtstruktur (185) am Schloss (22).

14. Verfahren gemäß Anspruch 12, wobei, wenn nur der zweite Stecker (21) in das Schloss (22) gesteckt wird, der zweite Koppelteil (2114) den Rastriegel (16) aus der Kopplung mit dem Raststück (15) schiebt, wodurch sich das Raststück (15) zum zweiten Koppelteil (2114) hin bewegt, ohne sich damit zu koppeln.

15. Verfahren gemäß Anspruch 12, wobei, wenn nur der erste Stecker (20) in das Schloss (22) gesteckt wird, der Rastriegel (16) außer Reichweite eines maximalen Hubs des ersten Steckers (20) liegt, wodurch der Rastriegel (16) in Kopplung mit dem Raststück (15) gehalten wird, um das Raststück (15) in der unverriegelten Stellung festzuhalten.

## Revendications

1. Système de fixation de harnais comprenant un ensemble enfichable (23) et une boucle (22) comprenant une détente (15) mobile pour se fixer à l'ensemble enfichable (23), **caractérisé en ce que**:
la boucle (22) comprend un verrou de détente (16) utilisable pour s'enclencher avec le verrou (15) pour retenir la détente à une position non verrouillée, et
le verrou de détente (16) est poussé par l'ensemble enfichable (23) lorsque l'ensemble enfichable (23) est inséré dans la boucle (22), sachant que la détente (15) est retirée du verrou de détente (16) et se déplace pour se fixer à l'ensemble enfichable (23).

2. Système de fixation de harnais selon la revendication 1, dans lequel la détente (15) et le verrou de détente (16) se déplacent le long de directions perpendiculaires.

3. Système de fixation de harnais selon la revendication 1, dans lequel le verrou de détente (16) est biaisé pour s'enclencher avec la détente (15) via un premier élément de ressort (17).

4. Système de fixation de harnais selon la revendication 3, dans lequel la détente (15) se déplace pour fixer l'ensemble enfichable (23) sous l'action d'un second élément de ressort (19).

5. Système de fixation de harnais selon la revendication 4, dans lequel la boucle (22) comprend en outre un bouton de déverrouillage (11) utilisable pour pousser contre la détente (15), sachant que la détente (15) se détache de l'ensemble enfichable (23).

6. Système de fixation de harnais selon la revendication 5, dans lequel le verrou de détente (16) peut se déplacer sous l'action du premier élément de ressort (17) pour se réenclencher avec la détente (15) pour retenir la détente (15) à la position non verrouillée après que la détente (15) se soit détachée de l'ensemble enfichable (23).

7. Système de fixation de harnais selon la revendication 1, dans lequel l'ensemble enfichable (23) comprend une première cheville (20) et une seconde cheville (21) couplées l'une avec l'autre, la première cheville (20) possédant une première partie d'enclenchement (2014), la seconde cheville (21) possédant une seconde partie d'enclenchement (2114) adaptée pour accueillir, en la retenant, ladite première partie d'enclenchement (2014).

8. Système de fixation de harnais selon la revendication 7, dans lequel, lorsque l'ensemble enfichable (23) est inséré dans la boucle (22), la détente (15) s'enclenche avec la première partie d'enclenchement (2014) de la première cheville (20) et la seconde partie d'enclenchement (2114) pousse contre le verrou de détente (16) appartenant à la seconde partie d'enclenchement (2114) de longueur plus grande que la première partie d'enclenchement (2014), sachant que la détente (15) est dégagée de l'action de rétention du verrou de détente (16).

9. Système de fixation de harnais selon la revendication 7, dans lequel, lorsque seule la seconde cheville (21) est insérée dans la boucle (22), la seconde partie d'enclenchement (2114) pousse le verrou de détente (16) hors de l'enclenchement avec la détente (15), sachant que la détente (15) se déplace vers la seconde partie d'enclenchement (2114) sans s'enclencher avec cette dernière.

10. Système de fixation de harnais selon la revendication 7, dans lequel la première cheville (20) et la seconde cheville (21) présentent des contours extérieurs différents, y compris des parties de formes complémentaires.

11. Système de fixation de harnais selon la revendication 1, dans lequel l'ensemble enfichable (23) et la boucle (22) comportent respectivement une première et une seconde structures d'alignement (2022, 185), lorsque l'ensemble enfichable (23) est inséré dans la boucle (22) sans alignement entre la première et la seconde structure d'alignement (2022, 185), l'ensemble enfichable (23) est bloqué pour qu'il ne pousse pas contre le verrou de détente (16), de telle manière que le verrou de détente (16) est maintenu enclenché avec la détente (15) pour retenir la détente (15) à la position non verrouillée.

12. Méthode pour utiliser un système de fixation de harnais, dans laquelle le système de fixation de harnais comprend un ensemble enfichable (23) et une boucle (22), la boucle (22) comprenant une détente (15) et un verrou de détente (16) utilisable pour s'enclencher avec la détente (15) pour retenir la détente (15) à une position non verrouillée, la méthode comprenant :
assembler une première cheville (20) avec une seconde cheville (21), sachant que la première cheville (20) possède une première partie d'enclenchement (2014) et la seconde cheville (21) possède une seconde partie d'enclenchement (2114), la première partie d'enclenchement (2014) étant adaptée pour accueillir, en la retenant, ladite seconde partie d'enclenchement (2114) pour former l'ensemble enfichable (23) ;
placer l'ensemble enfichable (23) à une position en face de la boucle (22) ; et
insérer les première et seconde parties d'enclenchement (2014 , 2114) couplées l'une avec l'autre dans la boucle (22) pour faire à ce que la seconde partie d'enclenchement (2114) pousse le verrou de détente (16) hors de l'enclenchement de rétention avec la détente (15), sachant que la détente (15) se déplace pour s'enclencher avec la première partie d'enclenchement (2014).

13. Méthode selon la revendication 12, dans laquelle l'étape de placement de l'ensemble enfichable (23) à une position en face de la boucle (22) comprend :
aligner une première structure d'alignement (2022) sur l'ensemble enfichable (23) avec une seconde structure d'alignement (185) sur la boucle (22).

14. Méthode selon la revendication 12, dans lequel, lorsque seule la seconde cheville (21) est insérée dans la boucle (22), la seconde partie d'enclenchement (2114) pousse le verrou de détente (16) hors de l'enclenchement avec la détente (15), sachant que la détente (15) se déplace vers la seconde partie d'enclenchement (2114) sans s'enclencher avec cette dernière.

15. Méthode selon la revendication 12, dans lequel, lorsque seule la première cheville (20) est insérée dans la boucle (22), le verrou de détente (16) est hors de portée de la première cheville (20) d'une course maximale, sachant que le verrou de détente (16) est maintenu en enclenchement avec la détente (15) pour retenir la détente (15) à la position non verrouillée.
